# FASCICULE DE BREVET EUROPEEN

(11) **EP 4 186 761 B1**
(45) Date de publication et mention de la délivrance du brevet: **01.01.2025**
(21) Numéro de dépôt: 22208148.1
(22) Date de dépôt: 17.11.2022
(51) Int. Cl.: B60T 13/74

(54) **ACTIONNEUR ÉLECTROMÉCANIQUE COMPRENANT UNE UNITÉ DE COMMANDE ÉLECTRONIQUE**
ELEKTROMECHANISCHER AKTUATOR MIT EINER ELEKTRONISCHEN STEUEREINHEIT
ELECTROMECHANICAL ACTUATOR COMPRISING AN ELECTRONIC CONTROL UNIT

(30) Priorité: 24.11.2021 FR 2112466
(43) Date de publication de la demande: 31.05.2023
(73) Titulaire: Hitachi Astemo France, 93700 Drancy (FR)
(72) Inventeur: AKOURTAM, Samy, 92200 BAGNEUX (FR); BOURLON, Philippe, 77230 DAMMARTIN EN GOELE (FR); CUBIZOLLES, Cyril, 93700 DRANCY (FR); DELMEIRE, Dimitri, 95130 FRANCONVILLE (FR)
(74) Mandataire: LLR

(56) Documents cités:
- US-A1- 2009 281 702
- US-A1- 2017 152 027
- US-A1- 2019 184 951
- US-A1- 2020 023 821
- US-A1- 2020 114 891

## Description

L'invention se rapporte à un actionneur électromécanique. Plus précisément, l'invention se rapporte à un actionneur électromécanique pour un dispositif de freinage, un dispositif de freinage de véhicule comprenant un tel actionneur électromécanique et un système de freinage de véhicule.

Un système de freinage, par exemple un système de freinage à disque plus communément appelé « frein à disque » ou un système de freinage à tambour plus communément appelé « frein à tambour », comprend en général un organe de friction relié à un actionneur apte à déplacer l'organe de friction en direction d'un organe de freinage fixé à une roue du véhicule. Cela a pour but de mettre l'organe de friction en contact avec l'organe de freinage pour freiner le véhicule par friction ou de l'écarter de l'organe de freinage dans le but de cesser le freinage. Lorsque le système de freinage est un frein à disque, l'organe de friction est formé par une ou plusieurs plaquettes de frein et l'organe de freinage est formé par un disque solidaire de la roue. Dans le cas où le système de freinage est un frein à tambour, l'organe de friction est formé par au moins un segment portant une garniture de frein et l'organe de freinage est formé par un tambour solidaire de la roue.

L'actionneur comprend en général un moteur électrique couplé à des moyens d'entrainement comprenant un organe de conversion d'un mouvement de rotation, du moteur électrique, en un mouvement de translation, transmis aux moyens de friction. On parle alors d'actionneur électromécanique. Les documents US 2017/152027 A1 et US 2009/281702 A1 divulguent des exemples de tels actionneurs électromécaniques. Le freinage est commandé électroniquement au moyen d'une unité de commande électronique permettant le contrôle de la rotation du moteur électrique. A cette fin, l'unité de commande comprend généralement un étage de puissance, permettant la transmission de puissance d'une source d'énergie vers le moteur électrique, et un étage de commande, mettant en oeuvre un algorithme déterminant la manière dont le moteur électrique doit être commandé.

Une telle unité de commande électronique peut toutefois poser des problèmes d'encombrement. En effet, en fonction de l'architecture du système de freinage et plus généralement du véhicule, peu d'espace peut être disponible à proximité du dispositif de freinage, si bien qu'il est souvent complexe de positionner l'unité de commande électronique.

En outre, l'unité de commande électronique est un organe générant de la chaleur, si bien qu'il est nécessaire d'évacuer de l'énergie thermique pour éviter tout échauffement excessif de l'unité de commande électronique qui pourrait l'endommager. Pour ce faire, il est connu d'installer un radiateur sur une surface de l'unité de commande électronique pour permettre un échange d'énergique thermique entre l'unité de commande électronique et l'air ambiant. Mais cela amplifie le problème énoncé ci-dessus lié à l'encombrement dans le véhicule.

L'invention a ainsi pour but de permettre à l'unité de commande électronique de s'affranchir au maximum des contraintes d'encombrement du véhicule.

A cet effet, on prévoit selon l'invention un actionneur électromécanique comprenant :
- des moyens d'entrainement,
- un moteur électrique configuré pour fournir un couple aux moyens d'entrainement, et
- une unité de commande électronique configurée pour commander le moteur électrique,

l'unité de commande électronique comportant un étage de contrôle, configuré pour mettre en oeuvre un algorithme de commande du moteur électrique, et un étage de puissance configuré pour transmettre de l'énergie électrique au moteur électrique sous commande de l'étage de contrôle,
l'étage de contrôle et l'étage de puissance étant disposés à distance l'un de l'autre.

Par l'expression « l'étage de contrôle et l'étage de puissance sont disposés à distance l'un de l'autre », on entend que l'étage de puissance et l'étage de contrôle ne sont pas en contact l'un avec l'autre, ou autrement dit, qu'il n'existe aucun point ou surface de contact entre ces deux éléments. En d'autres termes, l'étage de contrôle est séparé de l'étage de puissance, par exemple par un espace d'air ou par un autre composant.

Ainsi, on sépare l'unité de commande électronique en deux composants, l'étage de contrôle et l'étage de puissance, ce qui rend possible de placer ces deux composants à différents emplacements dans l'actionneur électromécanique. On comprend qu'il est plus simple de positionner deux composants dans un environnement restreint qu'un bloc regroupant lesdits composants.

Au surplus, l'étage de puissance génère de la chaleur, ce qui peut causer une élévation en température des composants adjacents. En séparant l'étage de puissance de l'étage de contrôle, on réduit les risques que la chaleur générée par l'étage de puissance puisse chauffer l'étage de contrôle et gêner son fonctionnement. De la même manière, cette séparation empêche les perturbations électromagnétiques générées par l'étage de puissance de gêner le fonctionnement de l'étage de contrôle.

Cette séparation permet en outre de gérer individuellement l'état de l'étage de contrôle et l'état de l'étage de puissance. Ainsi, s'il est nécessaire de remplacer l'un de ces deux composants, par exemple s'il est défectueux ou en fin de vie, alors il est possible de le remplacer sans avoir à remplacer l'intégralité de l'unité de commande électronique.

Avantageusement, l'unité de commande électronique comporte en outre un étage de mesure angulaire configuré pour mesurer la position d'un rotor du moteur électrique et fournir des données de mesure à l'étage de contrôle, l'étage de mesure angulaire étant disposé à distance de l'étage de contrôle et de l'étage de puissance.

L'invention est ainsi applicable à plusieurs configurations d'unité de commande électronique, ici avec un troisième étage permettant la mesure de la position du rotor du moteur en vue d'alimenter l'algorithme de commande du moteur.

Avantageusement, l'actionneur électromécanique comprend un premier échangeur de chaleur, de préférence passif, attaché à l'étage de puissance.

Avantageusement, l'actionneur électromécanique comprend un second échangeur de chaleur, de préférence passif, attaché au moteur électrique.

L'étage de puissance et le moteur électrique sont des composants générant plus d'énergie thermique que l'étage de contrôle. Grâce à la séparation de ces composants, il est possible de mieux dimensionner et mieux positionner les échangeurs de chaleur, ce qui permet une évacuation de chaleur plus efficace. On optimise en outre l'utilisation de l'espace disponible dans l'actionneur électromécanique en dédiant la capacité de refroidissement aux composants qui en ont le plus besoin.

En outre, cette optimisation permet de réduire le volume et donc la masse des échangeurs de chaleur, les premier et second échangeurs de chaleur occupant un volume moins important qu'un échangeur de chaleur massif pour tout l'actionneur électromécanique. Cela permet de réduire la consommation en essence ou en énergie électrique pour l'entrainement du véhicule. De plus, l'actionneur électromécanique, et plus généralement le dispositif de freinage, forme de la masse du véhicule qui n'est pas suspendue. La réduction de masse des échangeurs de chaleur permet donc de réduire les perturbations du comportement du véhicule.

Avantageusement, les étages de l'unité de commande électronique sont connectés entre eux par des connecteurs numériques et/ou analogiques.

Avantageusement, l'étage de contrôle et l'étage de puissance sont formées par deux parties d'une plaque de circuit imprimé séparées par une jonction.

La séparation de l'étage de contrôle et de l'étage de puissance est ainsi simple et peu onéreuse à mettre en oeuvre.

De préférence, les deux parties de la plaque de circuit imprimés s'étendent perpendiculairement l'une par rapport à l'autre.

On peut ainsi adapter la forme de l'unité de commande électronique à la forme de l'actionneur électronique, ce qui facilite l'intégration de l'unité de commande électronique dans le dispositif de freinage.

On prévoit aussi selon l'invention un dispositif de freinage pour véhicule, comprenant un actionneur électromécanique tel que décrit dans ce qui précède et un organe de friction couplé aux moyens d'entrainement.

Selon un premier mode de réalisation de l'invention, le dispositif de freinage est du type à disque.

Selon un deuxième mode de réalisation de l'invention, le dispositif de freinage est du type à tambour.

L'invention peut ainsi être adaptée à différents types de dispositifs de freinage, ce qui illustre la souplesse de l'invention.

On prévoit également selon l'invention un système de freinage pour véhicule, comprenant :
- plusieurs organes de friction,
- pour chaque organe de friction, des moyens d'entrainement de l'organe de friction,
- pour chaque organe de freinage, un moteur électrique configuré pour fournir un couple aux moyens d'entrainement, et
- une unité de commande électronique configurée pour commander les moteurs électriques,

l'unité de commande électronique comportant un unique étage de contrôle, configuré pour mettre en oeuvre un algorithme de commande des moteurs électriques, et un étage de puissance pour chaque moteur électrique configuré pour transmettre de l'énergie électrique à son moteur électrique sous commande de l'étage de contrôle,
l'étage de contrôle et les étages de puissance étant disposés à distance les uns des autres.

Grâce à l'invention, il est possible de ne disposer que d'un seul étage de contrôle commun à tous les dispositifs de freinage et à tous les étages de puissance. Cela rend le système de freinage particulièrement compact. Cela permet également de réduire le nombre de composants le constituant et donc le coût de fabrication et de maintenance du système de freinage.

Avantageusement, l'unité de commande électronique comporte en outre un étage de mesure angulaire pour chaque moteur électrique configuré pour mesurer la position d'un rotor de son moteur électrique et fournir des données de mesure à l'étage de contrôle, l'étage de contrôle, les étages de puissance et les étages de mesure angulaire étant disposés à distance les uns des autres.

Avantageusement, le système de freinage comprend des premiers échangeurs de chaleur, de préférence passifs, attachés à chacun des étages de puissance.

Avantageusement, le système de freinage comprend des seconds échangeurs de chaleur, de préférence passifs, attachés à chacun des moteurs électriques.

Avantageusement, les étages de l'unité de commande électronique sont connectés entre eux par des connecteurs numériques.

### Brève description des figures

L'invention va être exposée plus en détails dans la description qui va suivre donnée uniquement à titre d'exemple et faite en se référant aux dessins annexés dans lesquels :
[Fig. 1] la figure 1 est une vue en perspective d'un dispositif de freinage selon un premier mode de réalisation de l'invention,
[Fig. 2] la figure 2 est une vue éclatée de certains éléments du dispositif de freinage de la figure 1,
[Fig. 3] la figure 3 est un schéma illustrant les interactions entre certains éléments du dispositif de freinage de la figure 1,
[Fig. 4] la figure 4 est une vue éclatée, à plus grande échelle et sous un autre angle que celle de la figure 2, d'un moteur électrique et d'un échangeur de chaleur du dispositif de freinage de la figure 1,
[Fig. 5] la figure 5 est une vue en perspective d'un dispositif de freinage selon un second mode de réalisation de l'invention,
[Fig. 6] la figure 6 est une vue schématique d'un système de freinage selon l'invention,
[Fig. 7] les figures 7a et 7b sont des vues en perspective d'un dispositif de freinage selon un troisième mode de réalisation de l'invention, respectivement sans et avec arrachement partiel du boîtier du dispositif, et
[Fig. 8] la figure 8 est une vue en coupe du dispositif de freinage des figures 7a et 7b.

### Description détaillée

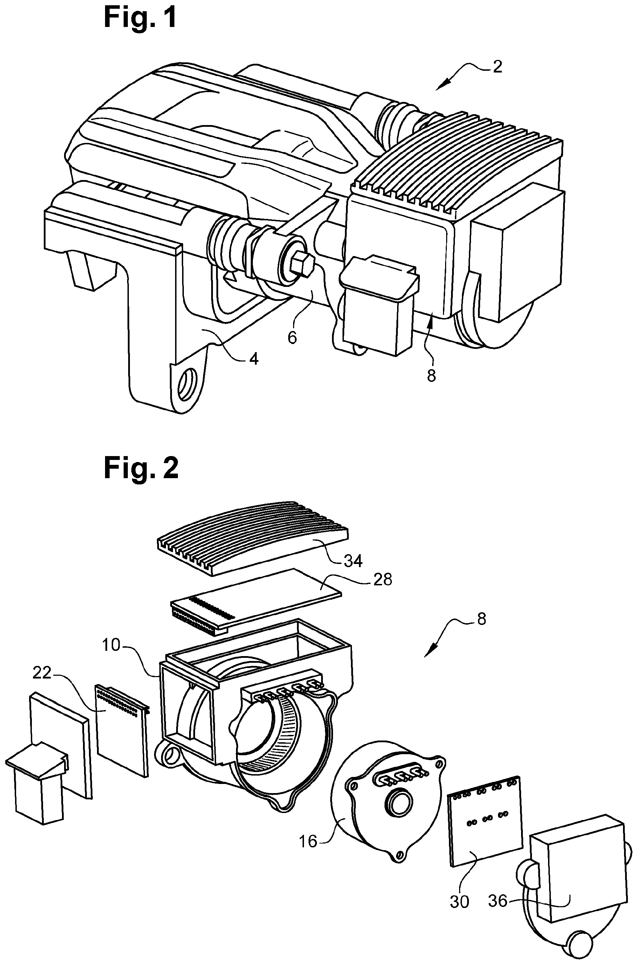

On a illustré en figure 1 un dispositif de freinage 2 de véhicule selon un premier mode de réalisation de l'invention. Ce dispositif de freinage 2 comprend une chape 4 solidaire d'un châssis d'un véhicule dans lequel le dispositif de freinage 2 est installé, et des organes de friction portés par un étrier 6 monté coulissant par rapport à la chape 4. Les organes de friction sont ici formés par deux plaquettes destinées à venir en contact avec des faces opposées d'un disque solidaire d'une roue du véhicule, le disque s'étendant partiellement entre les deux plaquettes. Le dispositif de freinage 2 a ici une configuration classique en étrier flottant.

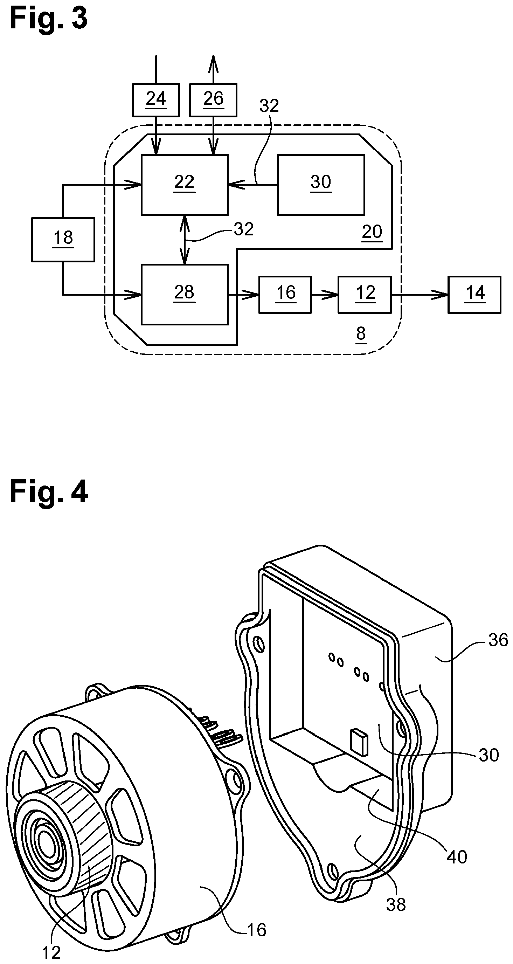

Le dispositif de freinage 2 comprend un actionneur électromécanique 8 permettant la mise en oeuvre du freinage. On a représenté en figure 2 une vue éclatée de l'actionneur électromécanique 8 et en figure 3 une vue schématique de l'actionneur électromécanique 8. L'actionneur électromécanique 8 comprend un boîtier 10 permettant de loger des moyens d'entrainement 12 permettant l'entrainement de l'étrier 6 et des organes de friction 14 afin de permettre le freinage et, réversiblement, l'arrêt du freinage.

L'actionneur électromécanique 8 comprend un moteur électrique 16 configuré pour mettre en mouvement les moyens d'entrainement 12. Il s'agit ici d'un moteur à courant continu sans balai, couramment désigné par les termes anglo-saxons « Brushless DC Motor ». Le moteur électrique 16 est alimenté en énergie électrique par une source d'énergie 18 du véhicule, par exemple une batterie du véhicule.

L'actionneur électromécanique 8 comprend une unité de commande électronique 20 configuré pour commander le moteur électrique 16 afin de mettre en oeuvre un freinage du véhicule. A cet effet, l'unité de commande électronique 20 comprend un étage de contrôle 22 configuré pour mettre en oeuvre un algorithme déterminant la manière dont le moteur électrique 16 doit être commandé. Pour alimenter cet algorithme, l'étage de contrôle 22 reçoit des informations provenant notamment de capteurs de vitesse 24 des roues du véhicule et d'un bus de données CAN 26 du véhicule. L'algorithme, en tant que tel, n'étant pas le coeur de l'invention, il ne sera pas décrit davantage dans ce qui suit.

L'unité de commande électronique 20 comprend un étage de puissance 28 permettant la transmission, de manière modulée, de puissance de la source d'énergie 18 vers le moteur électrique 16. A cette fin, l'étage de puissance 28 comprend ici un onduleur.

L'unité de commande électronique 20 comprend avantageusement un étage de mesure angulaire 30 configuré pour mesurer la position d'un rotor du moteur électrique 16 et fournir des données de mesure à l'étage de contrôle 22 pour alimenter l'algorithme. Ici, l'étage de mesure angulaire 30 comprend un capteur angulaire à magnétorésistance géante.

L'étage de contrôle 22, l'étage de puissance 28 et l'étage de mesure angulaire 30 sont situés à distance les uns des autres. En référence à la figure 2, l'étage de contrôle 22 est attaché à une face latérale du boîtier 10 de l'actionneur électromécanique 8. L'étage de puissance 28 est attaché à une face supérieure du boîtier 10 de l'actionneur électromécanique 8 de sorte qu'il n'est pas en contact direct avec l'étage de contrôle 22. L'étage de mesure angulaire 30 est attaché à une face arrière du moteur électrique 16 pour faciliter la mesure de la position angulaire du rotor, de sorte qu'il n'est pas en contact direct avec l'étage de contrôle 22, ni avec l'étage de puissance 28. Les étages sont connectés entre eux au moyen de connecteurs numériques et/ou analogiques 32 permettant la transmission de données, notamment les données de mesure angulaire, et la transmission de courant électrique entre les étages.

L'actionneur électromécanique 8 comprend au moins un premier échangeur de chaleur 34 attaché à l'étage de puissance 28 et comprenant ici un premier radiateur passif. Il présente des nervures ou ailettes permettant d'augmenter la surface d'échange entre le premier radiateur et l'air ambiant pour augmenter le pouvoir dissipateur du premier radiateur.

L'actionneur électromécanique 8 comprend au moins un second échangeur de chaleur 36 attaché au moteur électrique 16 et comprenant ici un second radiateur passif. Il présente des nervures ou ailettes permettant d'augmenter la surface d'échange entre le second radiateur et l'air ambiant pour augmenter le pouvoir dissipateur du second radiateur. Le second échangeur de chaleur 36 est illustré plus en détails en figure 4. Il comprend une première portion 38, qui est en contact direct avec un stator du moteur électrique 16, et une seconde portion 40 formant une cavité dimensionnée pour loger l'étage de mesure angulaire 30.

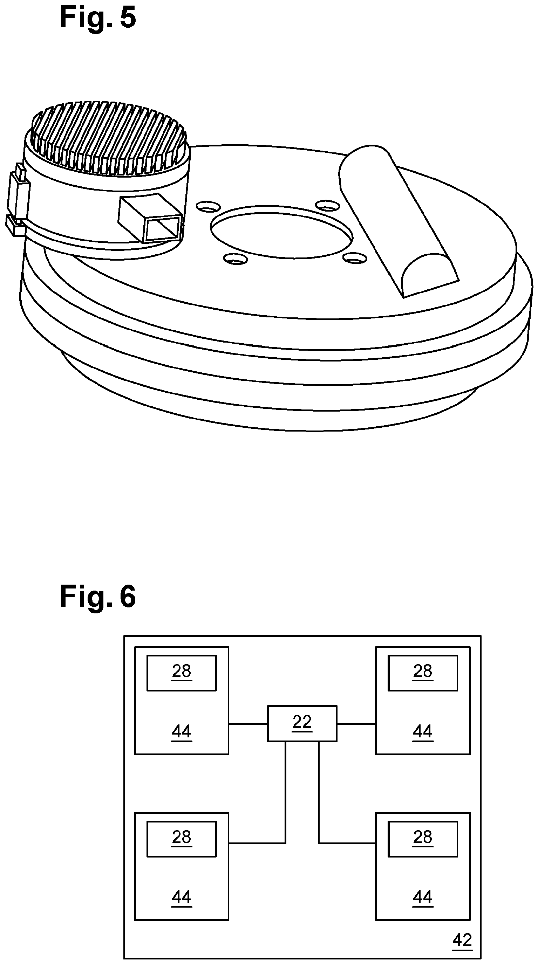

On a représenté en figure 5 un dispositif de freinage 2' de véhicule selon un second mode de réalisation de l'invention. Il diffère de celui du premier mode de réalisation en ce qu'il s'agit d'un dispositif de freinage du type à tambour. Une telle configuration de dispositif de freinage est bien connue, par exemple du document FR-3 014 513 A1, de sorte que son fonctionnement ne sera pas décrit dans ce qui suit. Le dispositif de freinage 2' comporte un actionneur électromécanique 8 tel que décrit dans le premier mode de réalisation. Tout comme dans le premier mode de réalisation de l'invention, l'étage de contrôle, l'étage de puissance et l'étage de mesure angulaire sont situés à distance les uns des autres, de sorte qu'ils ne sont pas en contact direct les uns avec les autres.

On a représenté en figure 6 un système de freinage 42 de véhicule selon l'invention. Il comprend quatre modules de freinage 44 similaires aux dispositifs de freinage tels que décrits dans ce qui précède, à une différence près. Les modules de freinage 44 sont dépourvus d'étage de contrôle qui leur est propre. A la place, le système de freinage 42 comprend un unique étage de contrôle 22 commun à tous les modules de freinage. Tout comme dans les dispositifs de freinage décrits dans ce qui précède, l'étage de contrôle, les étages de puissance et les étages de mesure angulaire sont situés à distance les uns des autres, de sorte qu'ils ne sont pas en contact direct les uns avec les autres.

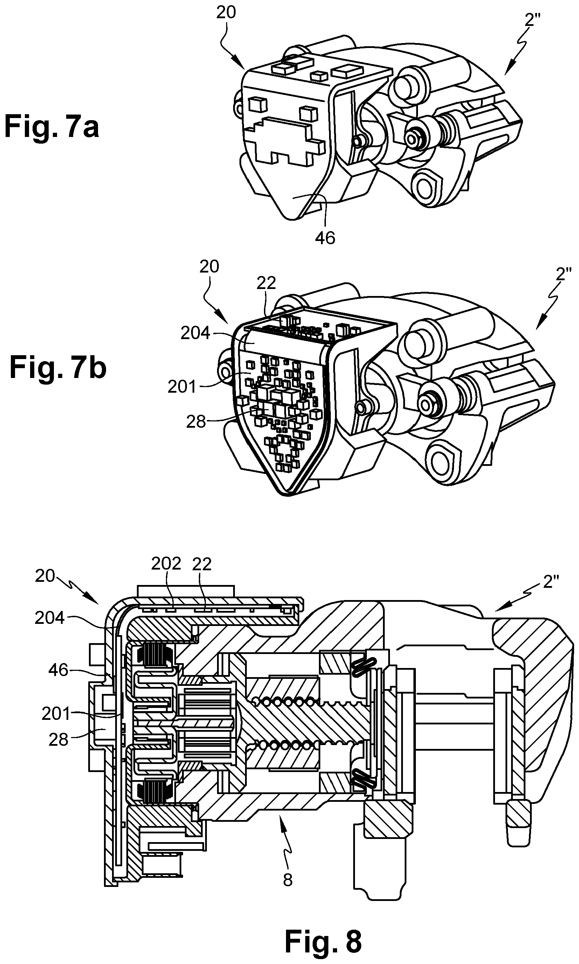

On a représenté en figures 7a, 7b et 8 un dispositif de freinage 2" de véhicule selon un troisième mode de réalisation de l'invention. Il diffère de celui du premier mode de réalisation en ce l'unité de commande électronique 20 se présente sous une forme différente.

Comme cela est visible sur la figure 7b, l'unité de commande électronique 20 comprend une plaque de circuit imprimé munie de composants électroniques. La plaque présente une première partie 201 sensiblement plane et une seconde partie 202 sensiblement plane, les deux parties 201, 202 s'étendant selon des plans non coplanaires. Ici, les deux parties 201, 202 de la plaque s'étendent perpendiculairement l'une par rapport à l'autre. Les deux parties 201, 202 de la plaque sont reliées l'une à l'autre par une jonction 204 permettant d'assurer la continuité électrique entre les deux parties 201, 202 tout en maintenant les deux parties 201, 202 à distance l'une de l'autre. La première partie comprend l'étage de puissance 28, tandis que la seconde partie 202 comprend l'étage de contrôle 22. La figure 7a illustre le boîtier 46 de l'unité de commande électronique 20, celui-ci présentant une forme permettant de protéger les deux parties 201, 202 de la plaque. Selon une variante de réalisation, la partie du boîtier de l'unité de commande électronique comprend un échangeur de chaleur, de préférence passif, configuré pour échanger de la chaleur avec l'étage de puissance.

### Liste de références

2 ; 2' ; 2" : dispositif de freinage
4 : chape
6 : étrier
8 : actionneur électromécanique
10 : boîtier de l'actionneur électromécanique
12 : moyens d'entrainement
14 : organe de friction
16 : moteur électrique
18 : source d'énergie
20 : unité de commande électronique
201 : première partie de la plaque de circuit imprimé
202 : seconde partie de la plaque de circuit imprimé
204 : jonction
22 : étage de contrôle
24 : capteur de vitesse
26 : bus de données CAN
28 : étage de puissance
30 : étage de mesure angulaire
32 : connecteur numérique et/ou analogique
34 : premier échangeur de chaleur
36 : second échangeur de chaleur
38 : première portion (du second échangeur de chaleur)
40 : seconde portion (du second échangeur de chaleur)
42 : système de freinage
44 : module de freinage
46 : boîtier de l'unité de commande électronique

## Revendications

1. Actionneur électromécanique (8), comprenant :
- des moyens d'entrainement (12),
- un moteur électrique (16) configuré pour fournir un couple aux moyens d'entrainement (12), et
- une unité de commande électronique (20) configurée pour commander le moteur électrique (16),
**caractérisé en ce que** l'unité de commande électronique (20) comporte un étage de contrôle (22), configuré pour mettre en oeuvre un algorithme de commande du moteur électrique (16), et un étage de puissance (28) configuré pour transmettre de l'énergie électrique au moteur électrique (16) sous commande de l'étage de contrôle (22),
l'étage de contrôle (22) et l'étage de puissance (28) étant disposés à distance l'un de l'autre.

2. Actionneur électromécanique (8) selon la revendication
précédente, dans lequel l'unité de commande électronique (20) comporte en outre un étage de mesure angulaire (30) configuré pour mesurer la position d'un rotor du moteur électrique (16) et fournir des données de mesure à l'étage de contrôle (22), l'étage de mesure angulaire (30) étant disposé à distance de l'étage de contrôle (20) et de l'étage de puissance (28).

3. Actionneur électromécanique (8) selon l'une quelconque des
revendications précédentes, comprenant un premier échangeur de chaleur (34), de préférence passif, attaché à l'étage de puissance (28).

4. Actionneur électromécanique (8) selon l'une quelconque des
revendications précédentes, comprenant un second échangeur de chaleur (36), de préférence passif, attaché au moteur électrique (16).

5. Actionneur électromécanique (8) selon l'une quelconque des
revendications précédentes, dans lequel les étages de l'unité de commande électronique (20) sont connectés entre eux par des connecteurs numériques et/ou analogiques (32).

6. Actionneur électromécanique (8) selon l'une quelconque des
revendications précédentes, dans lequel l'étage de contrôle (22) et l'étage de puissance (28) sont formées par deux parties (201, 202) d'une plaque de circuit imprimé séparées par une jonction (204).

7. Actionneur électromécanique (8) selon la revendication 6, dans laquelle les deux parties (201, 202) de la plaque de circuit imprimés s'étendent perpendiculairement l'une par rapport à l'autre.

8. Dispositif de freinage (2 ; 2' ; 2") pour véhicule, comprenant un actionneur électromécanique (8) selon l'une quelconque des revendications précédentes, et un organe de friction (14) couplé aux moyens d'entrainement (12).

9. Dispositif de freinage (2 ; 2") selon la revendication 8, le dispositif de freinage étant du type à disque.

10. Dispositif de freinage (2') selon la revendication 8, le dispositif de freinage étant du type à tambour.

11. Système de freinage (42) pour véhicule, comprenant :
- plusieurs organes de friction (14),
- pour chaque organe de friction (14), des moyens d'entrainement (12) de l'organe de friction (14),
- pour chaque organe de friction (14), un moteur électrique (16) configuré pour fournir un couple aux moyens d'entrainement (12), et
- une unité de commande électronique (20) configurée pour commander les moteurs électriques (16),
**caractérisé en ce que** l'unité de commande électronique (20) comporte un unique étage de contrôle (22), configuré pour mettre en oeuvre un algorithme de commande des moteurs électriques (16), et un étage de puissance (28) pour chaque moteur électrique (16) configuré pour transmettre de l'énergie électrique à son moteur électrique (16) sous commande de l'étage de contrôle (22), l'étage de contrôle (22) et les étages de puissance (28) étant disposés à distance les uns des autres.

12. Système de freinage (42) selon la revendication précédente, dans lequel l'unité de commande électronique (20) comporte en outre un étage de mesure angulaire (30) pour chaque moteur électrique (16) configuré pour mesurer la position d'un rotor de son moteur électrique (16) et fournir des données de mesure à l'étage de contrôle (22),
l'étage de contrôle (22), les étages de puissance (28) et les étages de mesure angulaire (30) étant disposés à distance les uns des autres.

13. Système de freinage (42) selon la revendication 11 ou 12, comprenant des premiers échangeurs de chaleur (34), de préférence passifs, attachés à chacun des étages de puissance (28).

14. Système de freinage (42) selon l'une quelconque des
revendications 11 à 13, comprenant des seconds échangeurs de chaleur (36), de préférence passifs, attachés à chacun des moteurs électriques (16).

15. Système de freinage (42) selon l'une quelconque des
revendications 11 à 14, dans lequel les étages de l'unité de commande électronique (20) sont connectés entre eux par des connecteurs numériques et/ou analogiques (32).

## Patentansprüche

1. Elektromechanischer Aktuator (8), aufweisend:
- Antriebsmittel (12),
- einen Elektromotor (16), der konfiguriert ist, ein Drehmoment an das Antriebsmittel (12) zu liefern, und
- eine elektronische Steuereinheit (20), die konfiguriert ist, den Elektromotor (16) zu steuern,
**dadurch gekennzeichnet, dass** die elektronische Steuereinheit (20) eine Steuerstufe (22), die konfiguriert ist, einen Algorithmus zur Steuerung des Elektromotors (16) zu implementieren, und eine Leistungsstufe (28) aufweist, die konfiguriert ist, unter der Steuerung der Steuerstufe (22) elektrische Energie an den Elektromotor (16) zu übertragen,
wobei die Steuerstufe (22) und die Leistungsstufe (28) voneinander beabstandet angeordnet sind.

2. Elektromechanischer Aktuator (8) nach dem vorhergehenden Anspruch, wobei die elektronische Steuereinheit (20) außerdem eine Winkelmessstufe (30) aufweist, die konfiguriert, die Position eines Rotors des Elektromotors (16) zu messen und Messdaten an die Steuerstufe (22) zu liefern, wobei die Winkelmessstufe (30) in einem Abstand von der Steuerstufe (22) und der Leistungsstufe (28) angeordnet ist.

3. Elektromechanischer Aktuator (8) nach einem der vorhergehenden Ansprüche, der einen ersten, vorzugsweise passiven Wärmetauscher (34) aufweist, der an der Leistungsstufe (28) angebracht ist.

4. Elektromechanischer Aktuator (8) nach einem der vorhergehenden Ansprüche, der einen zweiten, vorzugsweise passiven Wärmetauscher (36) aufweist, der am Elektromotor (16) angebracht ist.

5. Elektromechanischer Aktuator (8) nach einem der vorhergehenden Ansprüche, wobei die Stufen der elektronischen Steuereinheit (20) über digitale und/oder analoge Steckverbinder (32) miteinander verbunden sind.

6. Elektromechanischer Aktuator (8) nach einem der vorhergehenden Ansprüche, wobei die Steuerstufe (22) und die Leistungsstufe (28) durch zwei Teile (201, 202) einer gedruckten Leiterplatte gebildet werden, die durch eine Verbindung (204) getrennt sind.

7. Elektromechanischer Aktuator (8) nach Anspruch 6, wobei sich die beiden Teile (201, 202) der Leiterplatte senkrecht zueinander erstrecken.

8. Bremsvorrichtung (2; 2'; 2") für ein Fahrzeug, aufweisend einen elektromechanischen Aktuator (8) nach einem der vorhergehenden Ansprüche und ein Reibungselement (14), das mit den Antriebsmitteln (12) gekoppelt ist.

9. Bremsvorrichtung (2; 2") nach Anspruch 8, wobei die Bremsvorrichtung vom Scheibenbremstyp ist.

10. Bremsvorrichtung (2') nach Anspruch 8, wobei die Bremsvorrichtung vom Trommeltyp ist.

11. Bremssystem (42) für ein Fahrzeug, aufweisend:
- mehrere Reibungselemente (14),
- für jedes Reibungselement (14), Antriebsmittel (12) für das Reibungselement (14),
- für jedes Reibungselement (14) einen Elektromotor (16), der konfiguriert ist, ein Drehmoment an die Antriebsmittel (12) zu liefern, und
- eine elektronische Steuereinheit (20), die konfiguriert ist, die Elektromotoren (16) zu steuern,
**dadurch gekennzeichnet, dass** die elektronische Steuereinheit (20) eine einzelne Steuerstufe (22), die konfiguriert ist, einen Algorithmus zur Steuerung der Elektromotoren (16) zu implementieren, und eine Leistungsstufe (28) für jeden Elektromotor (16) aufweist, die konfiguriert ist, unter der Steuerung der Steuerstufe (22) elektrische Energie an ihren Elektromotor (16) zu übertragen, wobei die Steuerstufe (22) und die Leistungsstufen (28) voneinander beabstandet angeordnet sind.

12. Bremssystem (42) nach dem vorhergehenden Anspruch, wobei die elektronische Steuereinheit (20) außerdem eine Winkelmessstufe (30) für jeden Elektromotor (16) aufweist, die konfiguriert ist, die Position eines Rotors ihres Elektromotors (16) zu messen und Messdaten an die Steuerstufe (22) zu liefern,
wobei die Steuerstufe (22), die Leistungsstufen (28) und die Winkelmessstufen (30) voneinander beabstandet angeordnet sind.

13. Bremssystem (42) nach Anspruch 11 oder 12, mit ersten,
vorzugsweise passiven Wärmetauschern (34), die an jeder der Leistungsstufen (28) angebracht sind.

14. Bremssystem (42) nach einem der Ansprüche 11 bis 13, mit zweiten, vorzugsweise passiven Wärmetauschern (36), die an jedem der Elektromotoren (16) angebracht sind.

15. Bremssystem (42) nach einem der Ansprüche 11 bis 14, wobei die Stufen der elektronischen Steuereinheit (20) über digitale und/oder analoge Steckverbinder (32) miteinander verbunden sind.

## Claims

1. Electromechanical actuator (8), comprising:
- drive means (12),
- an electric motor (16) configured to supply a torque to the drive means (12), and
- an electronic control unit (20) configured to control the electric motor (16),
**characterised in that** the electronic control unit (20) comprises a control stage (22), configured to implement an algorithm for controlling the electric motor (16), and a power stage (28) configured to transmit electrical energy to the electric motor (16) under the control of the control stage (22),
the control stage (22) and the power stage (28) being arranged at a distance from each other.

2. Electromechanical actuator (8) according to the preceding claim,
wherein the electronic control unit (20) further comprises an angular measurement stage (30) configured to measure the position of a rotor of the electric motor (16) and supply measurement data to the control stage (22), the angular measurement stage (30) being arranged at a distance from the control stage (20) and from the power stage (28).

3. Electromechanical actuator (8) according to any one of the preceding claims, comprising a first, preferably passive, heat exchanger (34), attached to the power stage (28).

4. Electromechanical actuator (8) according to any one of the preceding claims, comprising a second, preferably passive, heat exchanger (36), attached to the electric motor (16).

5. Electromechanical actuator (8) according to any one of the preceding claims, wherein the stages of the electronic control unit (20) are connected together by digital and/or analogue connectors (32).

6. Electromechanical actuator (8) according to any one of the preceding claims, wherein the control stage (22) and the power stage (28) consist of two parts (201, 202) of a printed circuit board separated by a junction (204).

7. Electromechanical actuator (8) according to claim 6, wherein the two parts (201, 202) of the printed circuit board extend perpendicularly relative to each other.

8. Braking device (2; 2'; 2") for vehicle, comprising an electromechanical actuator (8) according to any one of the preceding claims, and a friction member (14) coupled to the drive means (12).

9. Braking device (2; 2") according to claim 8, the braking device being of the disc type.

10. Braking device (2') according to claim 8, the braking device being of the drum type.

11. Braking system (42) for vehicle, comprising:
- several friction members (14),
- for each friction member(14), drive means (12) for driving the friction member (14),
- for each friction member (14), an electric motor (16) configured to supply a torque to the drive means (12), and
- an electronic control unit (20) configured to control the electric motors (16),
**characterised in that** the electronic control unit (20) comprises a single control stage (22), configured to implement an algorithm for controlling the electric motors (16), and a power stage (28) for each electric motor (16) configured to transmit electrical energy to its electric motor (16) under the control of the control stage (22), the control stage (22) and the power stages (28) being arranged at a distance from each other.

12. Braking system (42) according to the preceding claim, wherein the electronic control unit (20) further comprises an angular measurement stage (30) for each electric motor (16) configured to measure the position of a rotor of its electric motor (16) and supply measurement data to the control stage (22),
the control stage (22), the power stages (28) and the angular measurement stages (30) being arranged at a distance from each other.

13. Braking system (42) according to claim 11 or 12, comprising first, preferably passive, heat exchangers (34), attached to each of the power stages (28).

14. Braking system (42) according to any one of claims 11 to 13, comprising second, preferably passive, heat exchangers (36), attached to each of the electric motors (16).

15. Braking system (42) according to any one of claims 11 to 14, wherein the stages of the electronic control unit (20) are connected together by digital and/or analogue connectors (32).
